# EUROPÄISCHE PATENTSCHRIFT

(11) **EP 2 113 453 B1**
(45) Veröffentlichungstag und Bekanntmachung des Hinweises auf die Patenterteilung: **02.01.2013**
(21) Anmeldenummer: 09002717.8
(22) Anmeldetag: 26.02.2009
(51) Int. Cl.: B62D 65/18, B25H 1/00, B23P 19/04

(54) **Motor-Transportwagen**
Motor transport vehicle
Véhicule de transport à moteur

(30) Priorität: 30.04.2008 DE 102008022556
(43) Veröffentlichungstag der Anmeldung: 04.11.2009
(73) Patentinhaber: Dr. Ing. h.c. F. Porsche AG, 70435 Stuttgart (DE)
(72) Erfinder: Spahn, Lothar, 74354 Besigheim (DE); Burgert, Thomas, 75233 Tiefenbronn (DE)

(56) Entgegenhaltungen:
- DE-A1- 10 243 477
- DE-U1-202004 001 810
- US-A- 3 017 176
- US-A1- 2006 231 696

## Beschreibung

Die Erfindung betrifft einen Motor-Transportwagen nach dem Oberbegriff des Patentanspruchs 1.

US 3 017 176 A1 offenbart einen solchen Motor-Transportwagen.

Aus der DE 102 43 475 A1 sowie der DE 102 43 477 B4 sind Einrichtungen zur Montage von Motoren, nämlich Brennkraftmaschinen, eines Kraftfahrzeugs bekannt. So weisen die aus diesem Stand der Technik bekannten Einrichtungen zur Montage von Brennkraftmaschinen ein Montageband auf, wobei auf dem Montageband einerseits Montageträger für Brennkraftmaschinen und andererseits Kommissionierungseinrichtungen positionierbar sind. Eine auf dem Montageträger positionierte Brennkraftmaschine ist zusammen mit der Kommissionierungseinrichtung, auf der zur Montage der Brennkraftmaschine benötigte Einzelteile bereitgehalten werden, zur Montage mit Hilfe des Montagebands durch einzelne Montagestationen transportierbar.

In einer Abgabestation des Montagebands muss eine vollständig montierte Brennkraftmaschine bzw. eine nahezu vollständig montierte Brennkraftmaschine vom Montageband entnommen werden, um an derselben weitere Montageschritte auszuführen, insbesondere um die Brennkraftmaschine mit einem Getriebe zusammenzuführen. Bislang bereitet die Handhabung von in der Abgabestation des Montagebands zu entnehmenden, zumindest teilweise montierten Brennkraftmaschinen Schwierigkeiten. So ist es nach der Praxis erforderlich, zur Ausführung weiterer Montageschritte an einer vom Montageband entnommenen Brennkraftmaschine dieselbe auf unterschiedlichen Einrichtungen zu positionieren. Dies ist umständlich und daher von Nachteil.

Hiervon ausgehend liegt der vorliegenden Erfindung das Problem zu Grunde einen neuartigen Motor-Transportwagen zu schaffen, der die Handhabung von zumindest teilweise montierten Motoren nach Entnahme derselben vom Montageband vereinfacht.

Dieses Problem wird durch einen Motor-Transportwagen gemäß Patentanspruch 1 gelöst. Erfindungsgemäß sind die Motoraufnahmebolzen auf einer Drehplatte befestigt, die zusammen mit den Motoraufnahmebolzen gegenüber der Grundplatte drehbar sind, um so die Motoraufnahmebolzen zwischen mindestens zwei Positionen zu verlagern.

Der erfindungsgemäße Motor-Transportwagen dient der Aufnahme und dem Transport eines zumindest teilweise montierten Motors eines Kraftfahrzeugs, also der Aufnahme und dem Transport einer zumindest teilweise montierten Brennkraftmaschine, und zwar nach Entnahme von einem Montageband. Für alle nachfolgenden Montageschritte am Motor, insbesondere für die Zusammenführung desselben mit einem Getriebe, kann der Motor auf dem erfindungsgemäßen Motor-Transportwagen verbleiben. Durch die Drehbarkeit der Motoraufnahmebolzen, die der Aufnahme des Motors dienen, ist derselbe für alle weiteren Montageschritte gut zugänglich.

Vorzugsweise sind durch Verdrehen der Drehplatte gegenüber der Grundplatte die Motoraufnahmebolzen zumindest zwischen einer Aufnahmeposition, in welcher der zumindest teilweise montierte Motor in einer Abgabestation eines Montagebands vom Montageband entnehmbar und auf den Motoraufnahmebolzen positionierbar ist, und einer Montageposition, in welcher am Motor weitere Montagearbeiten durchführbar sind, überführbar, wobei die Drehbarkeit der Drehplatte und damit die Drehbarkeit der Motoraufnahmebolzen durch Anschläge begrenzt ist, und wobei der Grundplatte eine Arretiereinrichtung zugeordnet ist, die in Aussparungen der Drehplatte zumindest in der Aufnahmeposition und der Montageposition eingreifen.

Nach einer vorteilhaften Weiterbildung der Erfindung sind dem Wagenrahmen Anschläge zugeordnet sind, mit Hilfe derer der Motor-Transportwagen relativ zu einer Abgabestation eines Montagebands in Laufrichtung des Motor-Transportwagens sowie quer zur Laufrichtung des Motor-Transportwagens ausrichtbar ist.

Nach einer weiteren vorteilhaften Weiterbildung der Erfindung ist der Motor-Transportwagen sowohl auf einem führerlosen Transportfahrzeug als auch auf einer Rollenbahn positionierbar.

Bevorzugte Weiterbildungen der Erfindung ergeben sich aus den Unteransprüchen und der nachfolgenden Beschreibung. Ausführungsbeispiele der Erfindung werden, ohne hierauf beschränkt zu sein, an Hand der Zeichnung näher erläutert. Dabei zeigt:
- Fig. 1: eine perspektivische Ansicht eines erfindungsgemäßen MotorTransportwagens;
- Fig. 2: eine weitere perspektivische Ansicht eines erfindungsgemäßen MotorTransportwagens;
- Fig. 3: eine Seitenansicht des erfindungsgemäßen Motor-Transportwagens zusammen mit einem auf demselben aufgenommenen Motor; und
- Fig. 4: eine Seitenansicht des erfindungsgemäßen Motor-Transportwagens zusammen mit einem führerlosen Transportfahrzeug für den MotorTransportwagen.

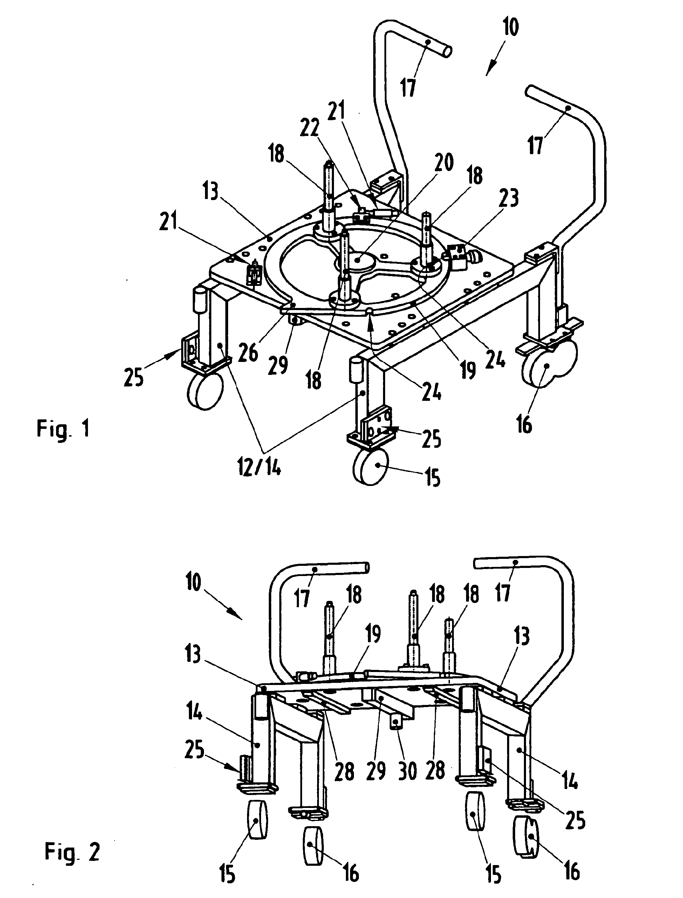

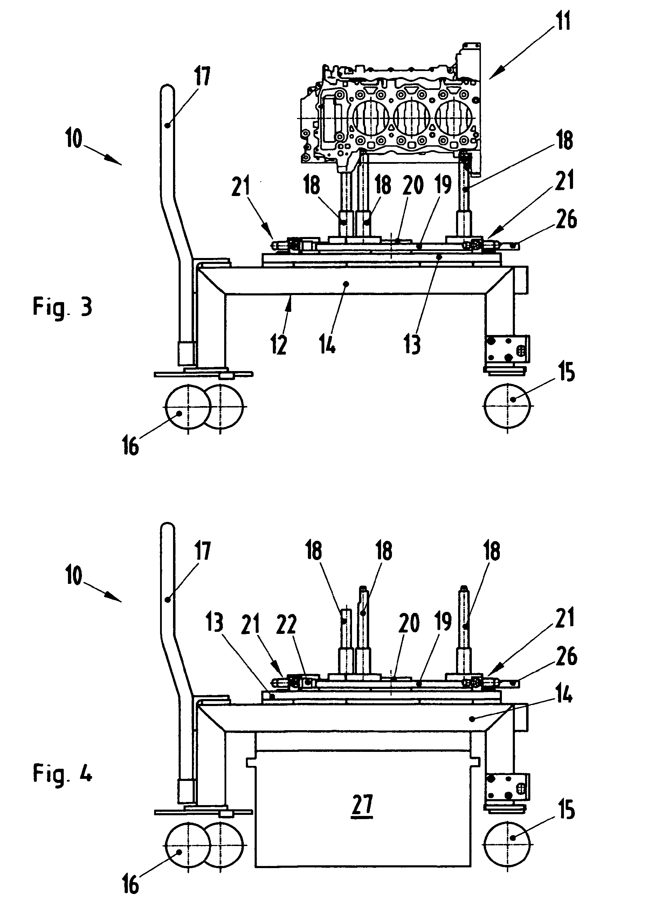

Die hier vorliegende Erfindung betrifft einen Motor-Transportwagen zur Aufnahme und zum Transport eines zumindest teilweise montierten Motors eines Kraftfahrzeugs, nämlich einer Brennkraftmaschine. Fig. 1 bis 4 zeigen unterschiedliche Ansichten eines Motor-Transportwagens 10 im Sinne der Erfindung, wobei in Fig. 3 der erfindungsgemäße Motor-Transportwagen 10 zusammen mit einem auf demselben positionierten, zumindest teilweise montierten Motor 11 gezeigt ist.

Der Motor-Transportwagen 10 verfügt über einen Wagenrahmen 12, auf dem eine Grundplatte 13 befestigt ist. Der Wagenrahmen 12 wird hierbei im gezeigten Ausführungsbeispiel von zwei U-förmigen Rahmenelementen 14 gebildet, denen Rollen 15, 16 zum Verfahren des Motor-Transportwagens auf einem Boden einer Montagehalle zugeordnet sind. Bei den Rollen 15 handelt es sich um feststehende Bockrollen und bei den Rollen 16 um drehbare Lenkrollen. Über am Rahmenwagen 12 angreifende Betätigungsgriffe 17 ist der Motor-Transportwagen 10 von einem Monteur verfahrbar.

Die Grundplatte 13 des Motor-Transportwagens 10 erstreckt sich zwischen den Rahmenelementen 14 des Rahmenwagens 12. Der Grundplatte 13 sind Motoraufnahmebolzen 18 zugeordnet, auf welchen ein zumindest teilweise an einem Montageband montierter Motor aufgenommen werden kann. Das Positionieren eines zumindest teilweise montierten Motors auf den Motoraufnahmebolzen 18 des Motor-Transportwagens 10 erfolgt in einer Abgabestation eines Montagebands.

Erfindungsgemäß sind die Motoraufnahmebolzen 18 auf einer Drehplatte 19 befestigt, wobei die Drehplatte 19 über ein Drehgelenk 20 drehbar auf der Grundplatte 13 des Motor-Transportwagens 10 gelagert ist. Die Motoraufnahmebolzen 18 sind zusammen mit der Drehplatte 18 relativ zur Grundplatte 13 verdrehbar, um so die Motoraufnahmebolzen 18 zwischen mindestens zwei Positionen zu verlagern.

Durch Verdrehen der Drehplatte 19 relativ zur Grundplatte 13 sind die Motoraufnahmebolzen 18 zumindest zwischen einer Aufnahmeposition und einer Montageposition überführbar, wobei in der Aufnahmeposition ein zumindest teilweise am Montageband montierter Motor in der Abgabestation des Montagebands vom Montageband entnehmbar und auf den Motor-Aufnahmebolzen 18 des Motor-Transportwagens 10 positionierbar ist. In der Montageposition der Motoraufnahmebolzen 18 ist derselbe zur Ausführung von weiteren Montagearbeiten gut zugänglich.

Im gezeigten Ausführungsbeispiel ist die Drehplatte 19 zusammen mit den Motoraufnahmebolzen 18 zwischen der in Fig. 1 gezeigten Aufnahmeposition und der Montageposition in etwa um 90° drehbar, wobei die Drehbarkeit der Drehplatte 19 und damit die Drehbarkeit der Motoraufnahmebolzen 18 durch Anschläge 21 begrenzt ist. Die Anschläge 21 sind dabei gemäß Fig. 1 auf der Grundplatte 13 montiert und wirken mit einem an der Drehplatte 19 montierten Stopper 22 zusammen. Die Anschläge 21 sind dabei als Stoßdämpfer ausgeführt, um Stöße auf einen auf den Motoraufnahmebolzen 18 positionierten Motor beim Verdrehen der Drehscheibe 19 zwischen den unterschiedlichen Positionen zu vermeiden.

Wie am besten Fig. 1 entnommen werden kann, ist der Grundplatte 13 neben den beiden Anschlägen 21 weiterhin eine Arretiereinrichtung 23 zugeordnet. Die Arretiereinrichtung 23 ist dabei als Arretierbolzen ausgebildet, der in der Aufnahmeposition und in der Montageposition in entsprechende Aussparungen 24 der Drehplatte 19 eingreift und so die Drehplatte 19 und damit den Motoraufnahmebolzen 18 in der Aufnahmeposition sowie der Montageposition sichert.

Nach einer Weiterbildung des erfindungsgemäßen Motor-Transportwagens 10 sind dem Wagenrahmen 12, nämlich den U-förmigen Rahmenelementen 14, Anschläge 25 zugeordnet. Über die Anschläge 25 ist der Motor-Transportwagen 10 relativ zu einer Abgabestation eines Montagebands sowohl in Laufrichtung des Motor-Transportwagens 10 als auch quer zur Laufrichtung des Motor-Transportwagens 10 ausrichtbar. Hierdurch wird gewährleistet, dass der Motor-Transportwagen 10 exakt zur Abgabestation des entsprechenden Montagebands selbsttätig ausgerichtet wird, sodass ein auf dem Motor-Transportwagen 10 zu positionierender Motor ohne Beschädigungsgefahr sicher auf den Motoraufnahmebolzen 18 positioniert werden kann.

Dann, wenn der Motor-Transportwagen 10 über die Anschläge 25 zur Abgabestation des Montagebands ausgerichtet ist, ist die Drehstellung der Drehplatte 19 und damit der Motoraufnahmebolzen 18 über einen der Drehplatte 19 zugeordneten Vorsprung 26 abfragbar, indem der Vorsprung 26 einen der Abgabestation des Montagebands zugeordneten Schalter betätigt. Nur dann, wenn hierbei festgestellt wird, dass sich die Motoraufnahmebolzen 18 in der Aufnahmeposition befinden, ist ein Motor in der Abgabestation des Montagebands auf den Motoraufnahmebolzen 18 positionierbar.

Der erfindungsgemäße Motor-Transportwagen 10 ist auf einem führerlosen Transportfahrzeug 27 (siehe Fig. 4) positionierbar und vom führerlosen Transportfahrzeug 27 verlagerbar. Dabei ist das führerlose Transportfahrzeug quer zur Laufrichtung des Motor-Transportwagens derart unter denselben einführbar, dass der Motor-Transportwagen mit den Rahmenelementen 14 des Rahmenwagens 12 auf dem führerlosen Transportfahrzeug 27 aufsitzt, um so denselben von einem Boden einer Montagehalle abzuheben. Der so vom Boden der Montagehalle abgehobene Motor-Transportwagen kann dann vom führerlosen Transportfahrzeug 27 automatisiert innerhalb einer Montagehalle verlagert werden.

Weiterhin ist der erfindungsgemäße Motor-Transportwagen 10 auf einer nicht-gezeigten Rollenbahn positionierbar, wozu der Motor-Transportwagen 10 in Laufrichtung desselben auf die Rollenbahn aufgeschoben werden kann. Einer Unterseite der Grundplatte 13 (siehe Fig. 2) sind hierzu Leisten zugeordnet, um den Motor-Transportwagen 10 auf der Rollenbahn auszurichten. So verfügt im gezeigten Ausführungsbeispiel der Motor-Transportwagen 10 über zwei erste Leisten 28, die der Höhenausrichtung des Motor-Transportwagens auf dem Rollenband dienen. Weiterhin ist der Unterseite der Grundplatte 19 eine zweite Leiste 29 zugeordnet, die der Seitenausrichtung des Motor-Transportwagens 10 auf dem Rollenband dient. Die Seitenausrichtung des Motor-Transportwagens 10 auf dem Rollenband erfolgt dabei quer zur Laufrichtung des Motor-Transportwagens 10.

Der zweiten Leiste 29 ist ein Anschlag 30 zur Längsausrichtung des Motor-Transportwagens auf dem Rollenband zugeordnet, wobei die Längsausrichtung des Motor-Transportwagens 10 in Laufrichtung desselben erfolgt.

Der erfindungsgemäße Motor-Transportwagen 10 dient demnach der Aufnahme und dem Transport von zumindest teilweise montierten Motoren und damit Brennkraftmaschinen nach Entnahme derselben von einem Montageband im Bereich einer Abgabestation des Montagebands. Ein auf dem erfindungsgemäßen Motor-Transportwagen 10 positionierter Motor 11 ist auf Motoraufnahmebolzen 18 positioniert, wobei die Motor-aufnahmebolzen 18 zwischen mindestens zwei Positionen überführbar sind, nämlich zwischen einer Aufnahmeposition und einer Montageposition. Der erfindungsgemäße Motor-Transportwagen 10 ist sowohl auf einem führerlosen Transportfahrzeug als auch auf einem Rollenband positionierbar. Während der gesamten Handhabung des Motors 10 bei der Ausführung von Montageschritten, insbesondere beim Verbauen des Motors mit einem Getriebe, kann der Motor auf dem erfindungsgemäßen Motor-Transportwagen 10 verbleiben. Ebenso kann eine Einheit aus Motor und Getriebe mit Hilfe des erfindungsgemäßen Motor-Transportwagens 10 einer Kraftfahrzeugkarosserie beim Verbauen der Einheit auf Motor und Getriebe in die Kraftfahrzeugkarosserie zugeführt werden.

## Patentansprüche

1. Motor-Transportwagen zur Aufnahme und zum Transport eines zumindest teilwelse montierten Motors eines Kraftfahrzeugs, mit einer an einem Wagenrahmen befestigten Grundplatte, wobei der Grundplatte Motoraufnahmebolzen zur Aufnahme eines Motors zugeordnet sind, und wobei dem Wagenrahmen Rollen zum Verfahren des Motor-Transportwagens zugeordnet sind, **dadurch gekennzeichnet, dass** die Motoraufnahmebolzen (18) auf einer Drehplatte (19) befestigt sind, die zusammen mit den Motoraufnahmebolzen (18) gegenüber der Grundplatte (13) drehbar ist, um so die Motoraufnahmebolzen (18) zwischen mindestens zwei Positionen zu verlagern, wobei der Drehplatte (19) ein Vorsprung (26) zur Abfrage der Drehstellung der Drehplatte (19) zugeordnet ist.

2. Motor-Transportwagen nach Anspruch 1, **dadurch gekennzeichnet, dass** durch Verdrehen der Drehplatte (19) gegenüber der Grundplatte (13) die Motor-aufnahmebolzen (18) zumindest zwischen einer Aufnahmeposition, in welcher der zumindest teilweise montierte Motor in einer Abgabestation eines Montagebands vom Montageband entnehmbar und auf den Motoraufnahmebolzen (18) positionierbar ist, und einer Montageposition, in welcher am Motor weitere Montagearbeiten durchführbar sind, überführbar sind.

3. Motor-Transportwagen nach Anspruch 2, **dadurch gekennzeichnet, dass** die Drehplatte (19) und damit die Motoraufnahmebolzen (18) zur Überführung derselben zwischen der Aufnahmeposition und der Montageposition um in etwa 90° drehbar sind.

4. Motor-Transportwagen nach einem der Ansprüche 1 bis 3, **dadurch gekennzeichnet, dass** die Drehbarkeit der Drehplatte (19) und damit die Drehbarkeit der Motoraufnahmebolzen (18) durch Anschläge (21) begrenzt ist.

5. Motor-Transportwagen nach einem der Ansprüche 1 bis 4, **dadurch gekennzeichnet, dass** der Grundplatte (13) eine Arretiereinrichtung (23) zugeordnet ist, die in Aussparungen (24) der Drehplatte (19) zumindest in der Aufnahmeposition und der Montageposition eingreift.

6. Motor-Transportwagen nach einem der Ansprüche 1 bis 5, **dadurch gekennzeichnet, dass** dem Wagenrahmen (12) Anschläge (25) zugeordnet sind, mit Hilfe derer der Motor-Transportwagen relativ zu einer Abgabestation eines Montagebands in Laufrichtung sowie quer zur Laufrichtung des Motor-Transportwagens ausrichtbar ist.

7. Motor-Transportwagen nach einem der Ansprüche 1 bis 6, **dadurch gekennzeichnet, dass** derselbe auf einem:führerlosen Transportfahrzeug positionierbar und vom führerlosen Transportfahrzeug verlagerbar ist.

8. Motor-Transportwagen nach Anspruch 7, **dadurch gekennzeichnet, dass** das führerlose Transportfahrzeug quer zur Laufrichtung des Motor-Transportwagens derart unter denselben einführbar ist, dass der Motor-Transportwagen mit dem Wagenrahmen auf dem führerlosen Transportfahrzeug aufsitzt.

9. Motor-Transportwagen nach einem der Ansprüche 1 bis 8, **dadurch gekennzeichnet, dass** derselbe auf einer Rollenbahn positionierbar ist.

10. Motor-Transportwagen nach Anspruch 9, **dadurch gekennzeichnet, dass** der Motor-Transportwagens in Laufrichtung desselben auf die Rollenbahn aufschiebbar ist.

11. Motor-Transportwagen nach Anspruch 9 oder 10, **dadurch gekennzeichnet, dass** einer Unterseite der Grundplatte (13) Leisten zugeordnet sind, um denselben auf der Rollenbahn auszurichten.

12. Motor-Transportwagen nach Anspruch 11, **dadurch gekennzeichnet, dass** mindestens eine erste Leiste (28) der Höhenausrichtung des Motor-Transportwagens auf dem Rollenband und mindestens eine zweite Leiste (29) der Seitenausrichtung des Motor-Transportwagens quer zur Laufrichtung desselben auf dem Rollenband dient, wobei mindestens einer zweiten Leiste (29) ein Anschlag (30) zur Längsausrichtung des Motor-Transportwagens in Laufrichtung desselben auf dem Rollenband zugeordnet ist.

## Claims

1. Engine transport truck for the reception and transport of at least partially assembled engine of a motor vehicle, with a baseplate fastened to a truck frame, the baseplate being assigned engine reception bolts for receiving an engine, and the truck frame being assigned rollers for the travel of the engine transport truck, **characterized in that** the engine reception bolts (18) are fastened on a rotary plate (19) which is rotatable, together with the engine reception bolts (18), with respect to the baseplate (13), in order thereby to displace the engine reception bolts (18) between at least two positions, the rotary plate (19) being assigned a projection (26) for locating the rotary position of the rotary plate (19).

2. Engine transport truck according to Claim 1, **characterized in that**, by the rotary plate (19) being rotated with respect to the baseplate (13), the engine reception bolts (18) can be transferred at least between a reception position, in which the at least partially assembled engine can be removed from the assembly line in an assembly line dispensing station and can be positioned on the engine reception bolts (18), and an assembly position, in which further assembly work can be carried out on the engine.

3. Engine transport truck according to Claim 2, **characterized in that** the rotary plate (19) and consequently the engine reception bolts (18) can be rotated through about 90° for the transfer of these between the reception position and the assembly position.

4. Engine transport truck according to one of Claims 1 to 3, **characterized in that** the rotatability of the rotary plate (19), and consequently the rotatability of the engine reception bolts (18), is limited by stops (21).

5. Engine transport truck according to one of Claims 1 to 4, **characterized in that** the baseplate (13) is assigned a locking device (23) which engages into clearances (24) of the rotary plate (19) at least in the reception position and assembly position.

6. Engine transport truck according to one of Claims 1 to 5, **characterized in that** the truck frame (12) is assigned stops (25), with the aid of which the engine transport truck can be oriented in relation to an assembly line dispensing station in the running direction and transversely to the running direction of the engine transport truck.

7. Engine transport truck according to one of Claims 1 to 6, **characterized in that** it can be positioned on a driverless transport vehicle and can be displaced by the driverless transport vehicle.

8. Engine transport truck according to Claim 7, **characterized in that** the driverless transport vehicle can be introduced under the engine transport truck transversely to the running direction of the latter in such a way that the engine transport truck sits with the truck frame on the driverless transport vehicle.

9. Engine transport truck according to one of Claims 1 to 8, **characterized in that** it can be positioned on a roller conveyor.

10. Engine transport truck according to Claim 9, **characterized in that** the engine transport truck can be pushed in its running direction onto the roller conveyor.

11. Engine transport truck according to Claim 9 or 10, **characterized in that** an underside of the baseplate (13) is assigned battens in order to orient the engine transport truck on the roller conveyor.

12. Engine transport truck according to Claim 11, **characterized in that** at least one first batten (28) serves for the vertical orientation of the engine transport truck on the roller conveyor and at least one second batten (29) serves for the lateral orientation of the engine transport truck transversely to its running direction on the roller conveyor, at least one second batten (29) being assigned a stop (30) for the longitudinal orientation of the engine transport truck in its running direction on the roller conveyor.

## Revendications

1. Chariot de transport de moteur, pour recevoir et transporter un moteur au moins partiellement monté d'un véhicule automobile, comprenant une plaque de base fixée à un châssis de chariot, des goujons de réception de moteur pour recevoir un moteur étant associés à la plaque de base, et des rouleaux pour le déplacement du chariot de transport de moteur étant associés au châssis de chariot, **caractérisé en ce que** les goujons de réception de moteur (18) sont fixés sur un plateau tournant (19) qui peut tourner conjointement avec les goujons de réception de moteur (18) par rapport à la plaque de base (13) afin de déplacer ainsi les goujons de réception de moteur (18) entre au moins deux positions, une saillie (26) pour demander la position de rotation du plateau tournant (19) étant associée au plateau tournant (19).

2. Chariot de transport de moteur selon la revendication 1, **caractérisé en ce que** par rotation du plateau tournant (19) par rapport à la plaque de base (13), les goujons de réception de moteur (18) peuvent être transférés au moins entre une position de réception dans laquelle le moteur au moins partiellement monté peut être enlevé d'une bande de montage dans un poste de déchargement de bande de montage et peut être positionné sur les goujons de réception de moteur (18), et une position de montage dans laquelle d'autres travaux de montage peuvent être effectués sur le moteur.

3. Chariot de transport de moteur selon la revendication 2, **caractérisé en ce que** le plateau tournant (19) et avec lui les goujons de réception de moteur (18) peuvent être tournés d'environ 90° pour le transfert des goujons de réception de moteur entre la position de réception et la position de montage.

4. Chariot de transport de moteur selon l'une quelconque des revendications 1 à 3, **caractérisé en ce que** la capacité de rotation du plateau tournant (19) et donc la capacité de rotation des goujons de réception de moteur (18) est limitée par des butées (21).

5. Chariot de transport de moteur selon l'une quelconque des revendications 1 à 4, **caractérisé en ce qu'**un dispositif de blocage (23) est associé à la plaque de base (13), lequel vient en prise dans des évidements (24) du plateau tournant (19) au moins dans la position de réception et dans la position de montage.

6. Chariot de transport de moteur selon l'une quelconque des revendications 1 à 5, **caractérisé en ce que** des butées (25) sont associées au châssis de chariot (12), à l'aide desquelles le chariot de transport de moteur peut être orienté par rapport à un poste de déchargement d'une bande de montage dans la direction d'avance et transversalement à la direction d'avance du chariot de transport de moteur.

7. Chariot de transport de moteur selon l'une quelconque des revendications 1 à 6, **caractérisé en ce que** celui-ci peut être positionné sur un véhicule de transport sans conducteur et peut être déplacé par le véhicule de transport sans conducteur.

8. Chariot de transport de moteur selon la revendication 7, **caractérisé en ce que** le véhicule de transport sans conducteur peut être introduit transversalement à la direction d'avance du chariot de transport de moteur sous celui-ci, de telle sorte que le chariot de transport de moteur repose avec le châssis de chariot sur le véhicule de transport sans conducteur.

9. Chariot de transport de moteur selon l'une quelconque des revendications 1 à 8, **caractérisé en ce que** celui-ci peut être positionné sur un convoyeur à rouleaux.

10. Chariot de transport de moteur selon la revendication 9, **caractérisé en ce que** le chariot de transport de moteur peut être poussé dans la direction d'avance de celui-ci sur le convoyeur à rouleaux.

11. Chariot de transport de moteur selon la revendication 9 ou 10, **caractérisé en ce que** des nervures sont associées à un côté inférieur de la plaque de base (13) afin d'orienter celle-ci sur le convoyeur à rouleaux.

12. Chariot de transport de moteur selon la revendication 11, **caractérisé en ce qu'**au moins une première nervure (28) sert à l'orientation en hauteur du chariot de transport de moteur sur le convoyeur à rouleaux et au moins une deuxième nervure (29) sert à l'orientation latérale du chariot de transport de moteur transversalement à la direction d'avance de celui-ci sur le convoyeur à rouleaux, une butée (30) étant associée à au moins une deuxième nervure (29) pour l'orientation longitudinale du chariot de transport de moteur dans la direction d'avance de celui-ci sur le convoyeur à rouleaux.
